Europäisches Patentamt

(19) **European Patent Office**

Office européen des brevets

(11) Veröffentlichungsnummer: **0 091 046**
**B1**

# EUROPÄISCHE PATENTSCHRIFT

(12)

(45) Veröffentlichungstag der Patentschrift:
**19.11.87**

(21) Anmeldenummer: **83103029.1**

(22) Anmeldetag: **26.03.83**

(51) Int. Cl.⁴: **G 01 N 21/64**, G 01 N 21/63

(54) **Anordnung zur Messung physikalischer Grössen.**

(30) Priorität: **08.04.82 DE 3213183**

(43) Veröffentlichungstag der Anmeldung:
**12.10.83 Patentblatt 83/41**

(45) Bekanntmachung des Hinweises auf die Patenterteilung:
**19.11.87 Patentblatt 87/47**

(84) Benannte Vertragsstaaten:
**AT BE CH FR GB IT LI LU NL SE**

(56) Entgegenhaltungen:
**DE - A - 2 632 556**
**DE - B - 2 508 637**
**US - A - 4 279 506**

(73) Patentinhaber: **Max-Planck-Gesellschaft zur Förderung der Wissenschaften e.V., Bunsenstrasse 10, D-3400 Göttingen (DE)**

(72) Erfinder: **Opitz, Norbert, Dr., Villigsterstrasse 6, D-5840 Schwerte (DE)**
Erfinder: **Lübbers, Dietrich Werner, Prof. Dr., Rheinianddamm 201a, D-4600 Dortmund (DE)**

(74) Vertreter: **Hofmann, Hans Walter, Dr., Hauberisserstrasse 36, D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Anordnung zur optischen Messung physikalischer Grössen sowie eine Methode zur Anordnung von Streuzentren in einem Raum (Anspruch 16).

Um Vorgänge auf oder in Körpern berührungslos zu messen wird der den Indikatorstoff enthaltende, mittels eines Stoffes abgegrenzte Raum, kurz als OPTODE bezeichnet, auf der Oberfläche, oder, wo die Transparenz des Messobjektes dies zulässt, im Messobjekt angeordnet. Sodann wird der Indikatorraum durch das vom Monochromator ausgehende Prüflicht beleuchtet und die Änderung des zurückkommenden Messlichtes, die durch den zu messenden physikalischen Parameter verursacht ist, mittels der Lichtmesseinrichtung gemessen. Die auf den jeweiligen physikalischen Parameter geeichten Anzeigevorrichtungen zeigen unmittelbar die Grösse oder die Grössenänderung des Parameters oder der Stoffkonzentration an.

Das Messlicht kann dabei, etwa durch Lumineszenz oder Fluoreszenz, die Farbe, oder durch selektive Absorption die Intensität seiner charakteristischen Farbe ändern.

Bei solchen Anordnungen ist bereits erkannt worden (DE-PS 2 508 637), dass der optischen Entkopplung von Messtrahlung und Membran eine wesentliche Bedeutung zukommt, weil sonst Rückwirkungen vom Messobjekt auf den Indikatorraum in das Messergebnis eingehen. Dazu wurde vorgeschlagen, die Innenseite des Indikatorraumes auf der der Lichtquelle gegenüberliegenden Seite zu verspiegeln -wodurch ein mehrfacher Durchgang des Messlichtes durch den Indikatorraum erfolgt und die Grenzfläche «Membran» optisch neutralisiert ist-, oder die Membran zu schwärzen, -sodass das vom Indikator geänderte Licht nur direkt aus dem Indikatorraum und nicht nach Reflexion an der Membran zum Lichtempfänger gelangt. Auch dadurch verhält sich der Indikatorraum optisch neutral.

Die vorgeschlagenen Anordnungen haben verschiedene Nachteile. So sind gut spiegelnde Flächen gleichzeitig diffusionsdicht, sodass die Messung beispielsweise von Stoffkonzentrationen nur bei Teilverspiegelung erfolgen kann. Dadurch ist aber die Rückwirkungsfreiheit vermindert. Geschwärzte Membranen andererseits verringern die Messtrahlung. Ausserdem versröden die Membranen leicht durch die eingebrachten Pigmente und zusätzlich eingebrachte Stoffe verfälschen beispielsweise bei Konzentrationsmessungen das Messergebnis aufgrund der eigenen Aufnahmefähigkeit für den zu messenden Stoff.

Die optische Entkopplung von Optoden zu verbessern hat sich die Erfindung deshalb zur Aufgabe gemacht.

Der Vorteil einer erfindungsgemässen Anordnung liegt darin, dass die optischen Eigenschaften der Membran nicht mehr wirksam werden. Dadurch können auch Änderungen dieser Eigenschaften nicht mehr in das Messergebnis eingehen. Solche Änderungen entstehen beispielsweise dadurch, dass die Membran des Indikatorraumes durch den Kontakt mit dem Messobjekt aufquillt oder dass bei der Messung eine Flüssigkeit als Phasengrenze vorliegt, die Eichung aber mit Gas an der Phasengrenze erfolgt.

Die Wirkung des Prüflichtes kann dadurch verbessert werden, dass Streuzentren in den Indikatorraum eingefügt werden. Durch solche Streuzentren wird nämlich der mittlere Lichtweg innerhalb des Indikatorraumes vergrössert und dadurch die Absorption erhöht.

Solche Streuzentren lassen sich einmal dadurch erzeugen, dass bei der Herstellung von Optoden beispielsweise der Indikator selbst oder ein anderer, bereits vorhandener Stoff oder aber eigens dazu in den Indikatorraum eingefügte Stoffe auf Überkonzentration gebracht werden, sodass kristalline oder aggregative Streuzentren im Indikatorraum bei Überschreitung der Grenzkonzentration entstehen.

Weiterhin können Streuzentren dadurch eingeführt werden, dass sogenannte MIKROKAPSELN oder NANOKAPSELN im Indikatorraum angeordnet sind.

Solche Nanokapseln sind bekannt und bestehen aus einer Membranhülle und einem davon umschlossenen Raum. Die Kapseln können mit den verschiedensten Stoffen, auch mit dem Membranmaterial, gefüllt sein.

Beispielsweise können flüssige Kristalle eingeschlossen sein, die sich bei Temperaturänderungen in ihrer Farbe ändern. Dadurch ist es möglich, zusätzlich zur eigentlichen Messaufgabe der Optode selbst noch deren Temperatur mittels der Nanokapseln zu bestimmen. Oder es kann mit einer Optode, die zur pH-Messung geeignet ist, durch Anordnung von mit Pyrenbuttersäure gefüllten Nanokapseln im Indikatorraum die Streuung vergrössert und mit den gleichen Nanokapseln gleichzeitig der Sauerstoffgehalt des Messobjektes bestimmt werden.

Es können jedoch auch einfach Pigmente oder mit Vorteil kolloidales Metall oder Metallpulver zur Erzeugung von Streuzentren verwendet werden.

Wenn die Zufügung von Streuzentren noch immer nicht zur Entkopplung ausreicht, kann dem Indikatorraum zusätzlich ein Absorber zugesetzt sein. Ein solcher Absorber kann für das Messlicht, das Prüflicht oder aber breitbandig ausgewählt werden.

Ist der Absorber für das Prüflicht ausgewählt, kann dadurch verhindert werden, dass das Prüflicht das Messobjekt selbst erreicht. Da die meisten biologischen Messobjekte selbst fluoreszieren, würde durch das Prüflicht eine erhebliche Untergrundstrahlung provoziert, die die Fluoreszenz oder die Farbänderung des Messindikators überdeckt.

Ebenso kann das Messlicht zu unkontrollierter Fluoreszenz des Messobjektes führen.

Die Überdeckung des Messignals kann einmal durch Zugabe von auf diese Fluoreszenzen angepassten Schmalbandabsorbern verringert werden. Reicht diese Anpassung nicht aus, wird besser ein Breitbandabsorber, beispielsweise Arsenazo III oder Fe203, zugegeben.

Besonders gute Absorptionsverhältnisse werden dann erreicht, wenn die Streuzentren und/oder die Absorptionsschichten überwiegend an der dem Messobjekt anliegenden stofflichen Begrenzung des Indikatorraumes angeordnet sind. Dadurch wird ein besserer Wirkungsgrad für die Strahlung erreicht.

Bei Optoden, bei denen sich die Wirkung und damit die Eindringtiefe des Prüflichtes durch den Parameter selbst ändert, kann die Elimination des Grenzschichteinflusses ebenfalls erfolgen, wenn den gewünschten Messbereichen die jeweils erforderlichen Schichtdicke der Optode zugeordnet wird.

In der Zeichnung, anhand derer die Erfindung erläutert wird, zeigen:

Fig. 1 eine Messanordnung,

Fig. 2 eine Strahlungsbilanz nach Fig. 1,

Fig. 3 Einzelfälle nach Fig. 1,

Fig. 4 Strahlungsbilanzen für Einzelfälle nach Fig. 3.

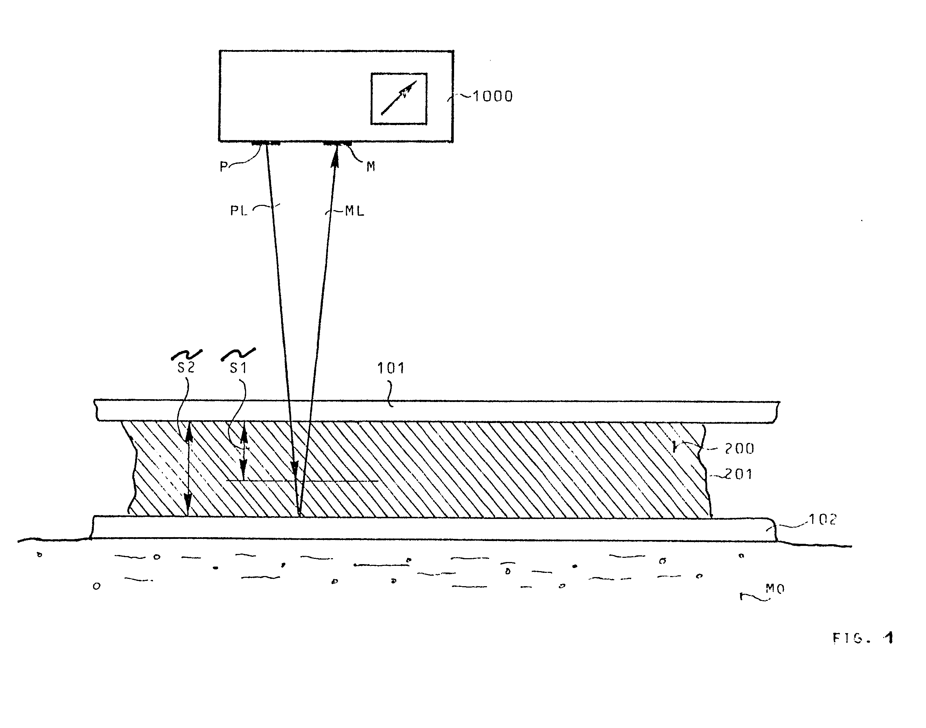

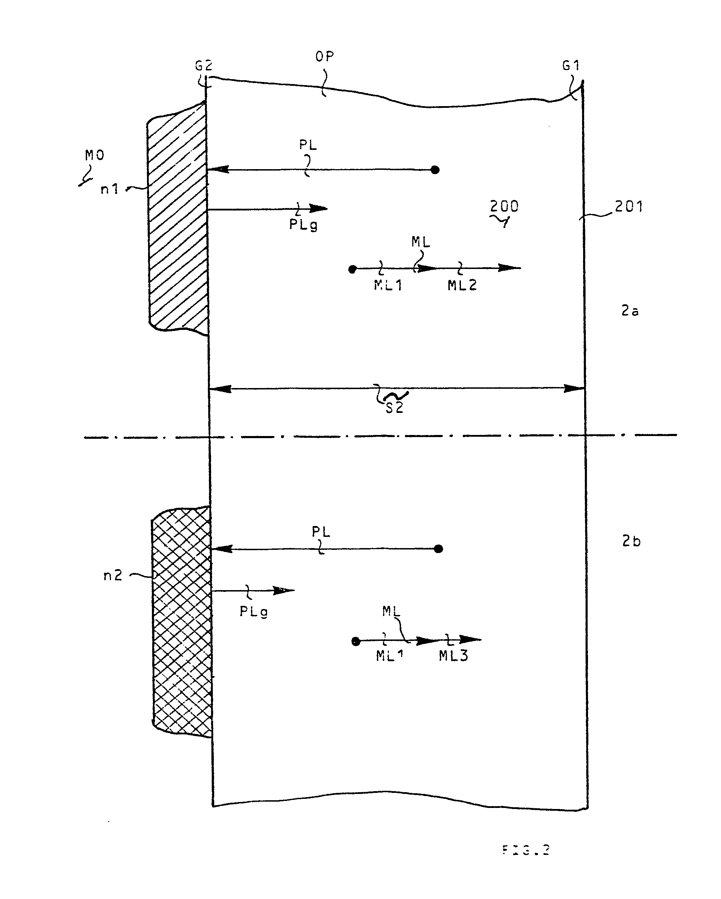

Zur zeichnerischen Vereinfachung sind die Strahlungspfeile in Fig. 1 und 2 jeweils bis zur Grenzfläche durchgezeichnet.

In Fig. 1 ist 101 der dem Prüflicht PL zugewandte Teil, 102 der am Messobjekt MO anliegende Teil einer den Indikatorraum 200 abschliessenden Membran 101, 102.

Eine Lichtmesseinrichtung 1000, die aus mindestens einer Strahlungsquelle, einem Monochromator, einem Lichtempfänger und einer Anzeigevorrichtung besteht, ist von üblicher Bauart und nicht im einzelnen dargestellt. Das Prüflicht PL geht von einer Öffnung P aus, das vom Messobjekt oder der Optode zurückkommende Messlicht ML tritt in eine Messöffnung M ein.

Der durch eine Membran abgeschlossene Indikatorraum, die OPTODE also, ist nur als Ausschnitt dargestellt. Das Licht PL tritt über die Membran 101 in den Indikatorraum 200 ein, der durch einen Indikator 201 ausgefüllt ist. Die Membran 102 ist in messendem Kontakt zum Messobjekt MO und fühlt dabei den zu messenden Parameter ab. Im vorliegenden Beispiel sei dies die Konzentration einer bestimmten, zu messenden Partikelart, beispielsweise von Sauerstoff. Ebensogut können aber, je nach dem verwendeten Indikator, auch andere Partikel oder andere physikalische oder chemische Parameter gemessen werden.

Probleme entstehen bei Anordnungen dieser Art, wenn das Prüflicht die Membran 102 durchsetzt. Dann erfolgt nämlich zwangsläufig eine Reflexion des Prüflichtes und auch des Messlichtes an den jeweils vorhandenen Phasengrenzen. Folglich treten dann auch Reflexionsänderungen auf, wenn sich beispielsweise der Brechungsindex des Messobjektes MO ändert. Das ist dann der Fall, wenn etwa die Optode mittels Gas geeicht, dann aber bei Flüssigkeiten angewendet werden soll. Die Eichung wird dadurch hinfällig, dass jeweils ein nicht vorhersehbarer Teil des Prüflichtes und des Messlichtes reflektiert wird.

Fig. 2 zeigt die entsprechenden Strahlungsbilanzen. Zur Vereinfachung ist eine als Folie ausgebildete Optode OP im Ausschnitt dargestellt (in diesem Falle stellt die Folie selbst den Indikatorraum dar, die Grenzflächen G1, G2 sind die Folienoberflächen), in der der Indikator chemisch gebunden ist. Die Pfeilgrössen stellen die Intensitäten der Strahlung dar.

Hat das Messobjekt (etwa Eichgas) den Brechungsindex n1, Fig. 2a, dann hat der rücklaufende Teil des Prüflichtes PL die Grösse PLg. Ist der Indikator beispielsweise ein Fluoreszenzindikator, dann hat das entstehende Fluoreszenzlicht (Messlicht) die Grösse $ML = ML1 + ML2$, wobei der Teil ML2 vom rücklaufenden Prüflicht hervorgerufen wird. Ist in Fig. 2b das Messobjekt etwa eine biologische Flüssigkeit, dann ist $n2 > n1$ und die Reflexion an der Phasengrenze verkleinert. Dann ist auch $ML = ML1 + ML3$ verkleinert. Der Wert $ML2-ML3$ ist also die Schwankung allein aufgrund der Änderung des Brechungsindex für das Prüflicht. Hinzu kommt die Schwankung des reflektierten Messlichtes.

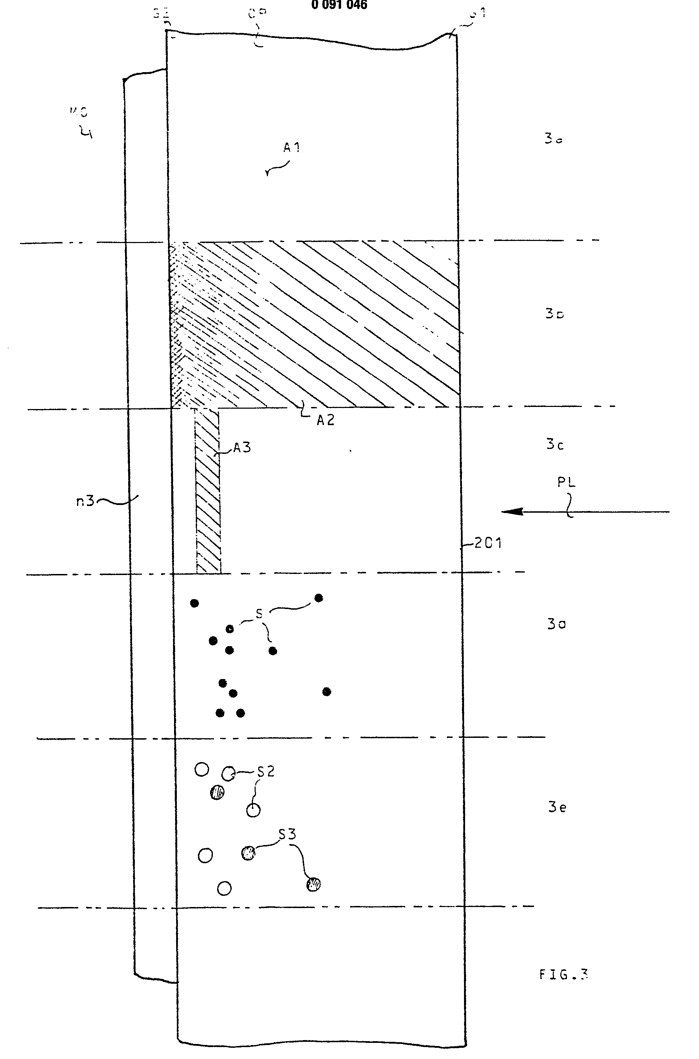

In Fig. 3 sind einige Beispiele für Anordnungen zur Verringerung oder Ausschaltung der optischen Rückwirkung angegeben: In Fig. 3a ist ein homogen verteilter Absorber A1, in Fig. 3b ein inhomogen, mit nach dem Messobjekt MO ansteigender Dichte verteilter Absorber A2, in Fig. 3c ein lagenweise angeordneter Absorber A3 zwischen den Grenzflächen G1, G2 des Indikatorraumes angeordnet. Der Brechungsindex des Messobjektes ist n3.

Die Absorber haben häufig eine geringe Absorption. Um die gewünschte optische Entkopplung der Grenzflächen zu erreichen, müssten deshalb grosse Schichtdicken verwendet werden. Das würde aber zu grossen Zeitkonstanten oder dem Erfordernis mechanischer Bewegung des Indikators oder des Messgutes führen. Deshalb ist es von Vorteil, die Absorption durch Einfügung von Streuzentren zu verbessern.

Die Streuung erhöht die Lichtweglänge beträchtlich, wenn die Durchmesser der Streuzentren und ihre Abstände in der Grössenordnung der Lichtwellenlänge des Mess- oder Prüflichtes liegen.

Die Verbesserung der Absorption durch Erhöhung des Lichtweges mittels Streuzentren ist deshalb vorteilhaft, weil dadurch die Dicke der Optoden und damit die Zeitkonstante für die Messung vermindert werden kann.

Als Streuzentren lassen sich alle mit den verwendeten Substanzen chemisch verträglichen Stoffe anwenden, die einen vom Indikatorraum verschiedenen Brechungsindex aufweisen. Auch Metallpartikel sind mit Vorteil verwendbar, weil sie nur sehr geringe Löslichkeitskoeffizienten für die meisten der zu messenden Stoffe haben, andererseits die Diffusion nicht behindern, wie im bekannten Stand der Technik.

Fig. 3d zeigt einen solchen Indikatorraum mit, beispielsweise metallischen, Streuzentren S, Fig. 3e einen mit Nanokapseln S2, S3 als Streuzentren versehenen Indikatorraum. Die Nanokapseln S2 seien mit einem weiteren Indikator versehen, der beispielsweise zur Temperaturmessung verwendet werden kann, die Nanokapseln S3 könnten mit einem neutralen Stoff von stark unterschiedlichem Brechungsindex oder mit einem dritten Indikator, beispielsweise zur Messung der Sauerstoffkonzentration gefüllt sein. Fig. 3e zeigt demnach ein Optodensystem aus einer Primäroptode OP und zwei Arten S2, S3 von Sekundäroptoden.

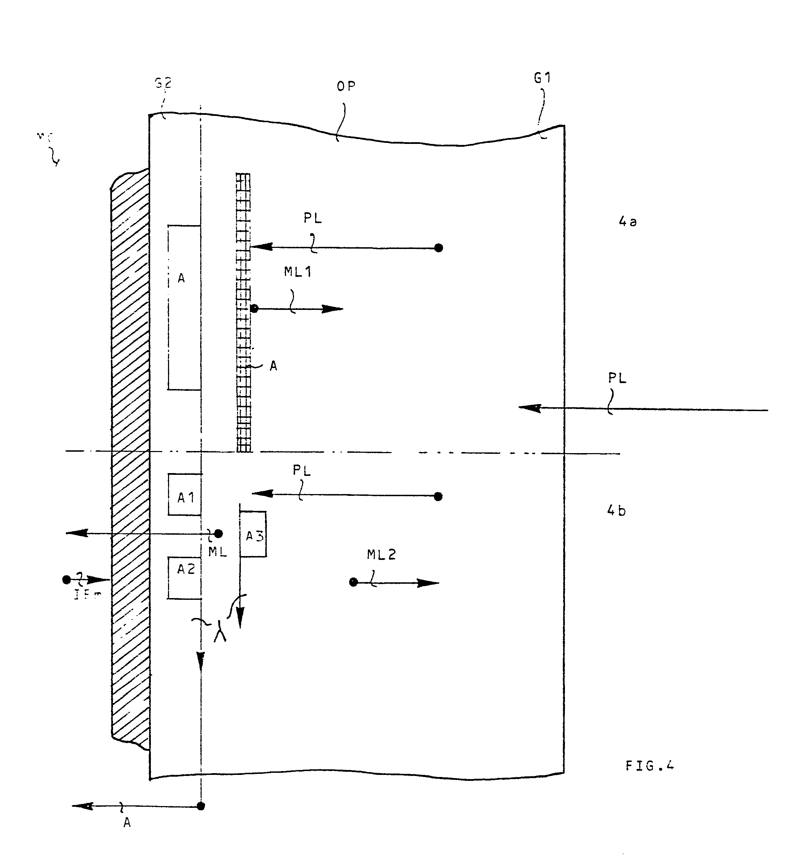

Die Strahlungsbilanz von Optoden entsprechend Fig. 3a und Fig. 3c ist in Fig. 4 dargestellt.

In Fig. 4a wird das Prüflicht PL durch eine Schicht eines Breitbandabsorbers A, dessen Absorptionsband auf der λ-Achse dargestellt ist, absorbiert. Das Messobjekt MO wird weder vom Prüflicht PL noch vom Messlicht ML erreicht, es entsteht nur die Fluoreszenzintensität ML1 aus dem Indikatorraum.

In Fig. 4b sind anstelle einer Schicht eines Breitbandabsorbers drei Schmalbandabsorber A1, A2 und A3 gleichmässig im Indikatorraum verteilt. Das Prüflicht PL sei auf dem Wege zur Grenzschicht G2 vom Schmalbandabsorber A1 absorbiert. Der Teil des Messlichtes, der an der Grenzschicht G2 entsteht und zur Lichtmesseinrichtung zurückläuft, wird durch den Absorber A3 eliminiert. Der Teil jedoch, der in das Messobjekt eindringt, erzeugt dort eine Fluoreszenz Ifm, die aber durch den Schmalbandabsorber A2 vor Erreichen der Grenzschicht G1 ausgeschaltet ist. Gemessen wird deshalb nur das Messlicht ML2, das aus Bereichen des Indikatorraumes ausserhalb der Grenzschicht G2 kommt, also von der Grenzschicht nicht verändert ist.

In Weiterbildung von Anordnungen nach Fig. 4b kann durch überlappende Schmalbandabsorber das Verhalten eines Breitbandabsorber nachgebildet werden. Das ist insbesondere deshalb von Interesse, weil Schmalbandabsorber häufiger sind als auf die Indikatoren angepasste Breitbandabsorber.

Eine inhomogene Verteilung von Absorbern und Streuzentren kann durch Sedimentation oder Zentrifugieren der Folie bei der Folienherstellung erreicht werden.

Zur Einlagerung von Metallpartikeln werden diese unmittelbar in eine Folienlösung vor Herstellung der Folie eingetragen.

Streuzentren lassen sich weiterhin auch dadurch erzeugen, dass die Folienlösung einen ausfällbaren Stoff in Überkonzentration enthält. Wird bei der Herstellung die Grenzkonzentration überschritten, entstehen die Streuzentren von selbst.

Ist beispielsweise eine 1-molare Lösung des Indikators Pyrenbuttersäure in Chloroform mit dem Kunststoff verrührt, aus dem die Folie bestehen soll, dann entstehen zahlreiche Streuzentren, die zu milchigen, undurchsichtigen Folien führen. Gut transparente Folien mit wenig Streuzentren hingegen werden mit 0.01 molaren Lösungen erreicht.

Die Einstellung der günstigsten Konzentration erfolgt, etwa bei gegebener Schichtdicke, dadurch, dass die Optode abwechselnd erst mit einem Eichgas und dann mit einem Messobjekt mit stark verschiedenem Brechungsindex beaufschlagt ist. Die Konzentration des Absorbers wird solange erhöht, bis sich nur noch eine niedrige, der gewünschten Genauigkeit entsprechende Änderung des Messwertes beim Wechsel des Messobjektes ergibt. Eichung ist dann für alle Messobjekte mit geringerem Brechungsindex gültig und unverändert.

Für den als Beispiel beschriebenen pH-Indikator Hydroxypyrentrisulfonat (HPTS) ergibt sich bei einer Lösung von:

1. 0.01 molar HPTS
2. 0.01 molar Natriumhydrogenkarbonat als Puffer
3. 3% $CO_2$
4. 2% Agarose
und bei
5. 510 nm Fluoreszenzstrahlung
6. 405 nm Anregungsstrahlung
7. Arsenazo III als Absorber
8. Nanokapseln mit Füllung von Polyacrylamid, 5 Mikrometer Durchmesser als Streuzentren (Anzahl n/qmm)
9. Indikatordicke 10 Mikrometer
10. $CO_2$ als Eichgas
11. Blutplasmaersatz (Macrodex) als Messobjekt
12. geforderter Eichgenauigkeit von 0.5%

die folgende Tabelle:

| Absorber mM/l | Streuzentren mg/ml | n | Abweichung Eichgas-Macrodex % | |
|---|---|---|---|---|
| 0 | | | −19,5 | |
| 0,65 | | | −4,2 | |
| | 5 | 250 | | −2,1 |
| | 10 | 500 | | −1,5 |
| | 15 | 750 | | −0,3 |
| 1,3 | | | −0,5 | |

Die Tabelle zeigt, dass bei Einfügung von Streuzentren (Zeile 2, Spalte 2) die Entkopplung (Rückgang der Abweichung auf −0.3%) bei geringerer Konzentration des Absorbers erfolgt (Konzentration 0.65 mM/l), als bei ausschliesslicher Verwendung von ArsenazoIII (1.3 mM/l, Rückgang der

Abweichung auf −0.5%, Zeile 3). Durch Verringerung der Absorberkonzentration ist der Strahlungsverlust in der Optode ebenfalls verringert.

Schichtdicken und Absorberkonzentrationen für andere Systeme lassen sich entsprechend dem obigen Beispiel bestimmen.

Wenn die Einfügung von Streuzentren zur Entkopplung nicht ausreicht, kann eine Einkopplung des Prüflichtes in die Optode -etwa seitlich- bei Winkeln unterhalb des Grenzwinkels der Totalreflexion in bekannter Weise erfolgen. Dadurch kann einmal die optische Weglänge weiter vergrössert werden und andererseits ist das Eindringen des Prüflichtes in das Messobjekt bei Totalreflektion weitgehend verhindert.

## Patentansprüche

1. Anordnung zur optischen Messung physikalischer Grössen, bestehend aus einer Lichtmesseinrichtung (1000) mit mindestens einer Strahlungsquelle, einem Prüflicht (PL) abgebenden Monochromator, einem Messlicht (ML) empfangenden Lichtempfänger und einer Anzeigevorrichtung und mindestens einem durch die Lichtmesseinrichtung (1000) vermessbaren, mittels eines Stoffes abgegrenzten Raum (200), in den Prüflicht (PL) eindringt und der Messlicht (ML) abgibt und der einen auf die zu messende physikalische Grösse mit einer Farbänderung im Messlicht (ML) reagierenden Indikator (201) enthält, dadurch gekennzeichnet, dass Absorption und Schichtdicke (S2) des Indikators (201) derart gewählt sind, dass die Eindringtiefe (S1) des Prüflichts (PL) kleiner als die Dicke (S2) des abgegrenzten Raums (200) ist.

2. Anordnung nach Anspruch 1, dadurch gekennzeichnet, dass der Indikator (201) ein Fluoreszenzindikator ist.

3. Anordnung nach Anspruch 1 oder 2, dadurch gekennzeichnet, dass Streuzentren (S, S2, S3) im Raum (200) angeordnet sind.

4. Anordnung nach Anspruch 3, dadurch gekennzeichnet, dass Nanokapseln (S2, S3) als Streuzentren im Raum (200) angeordnet sind.

5. Anordnung nach Anspruch 4, dadurch gekennzeichnet, dass die Nanokapseln (S2, S3) als sekundäre Indikatorräume ausgebildet sind, die auf einen oder mehrere weitere physikalische Grössen oder Teilchenkonzentrationen mit einer Farbänderung reagierende Indikatoren aufweisen.

6. Anordnung nach Anspruch 3, dadurch gekennzeichnet, dass die Streuzentren einen vom Raum (200) verschiedenen Brechungsindex aufweisen.

7. Anordnung nach Anspruch 3, dadurch gekennzeichnet, dass Metallpartikel als Streuzentren im Raum (200) vorgesehen sind.

8. Anordnung nach Anspruch 3, dadurch gekennzeichnet, dass Nichtmetalle als Streuzentren im Raum vorgesehen sind.

9. Anordnung nach Anspruch 3, dadurch gekennzeichnet, dass Pigmente als Streuzentren im Raum (200) vorgesehen sind.

10. Anordnung nach einem der Ansprüche 1 bis 9, dadurch gekennzeichnet, dass ein Breitbandabsorber (A) im Raum (200) vorgesehen ist.

11. Anordnung nach einem der Ansprüche 1 bis 9, dadurch gekennzeichnet, dass mindestens zwei Schmalbandabsorber (A1, A2) vorgesehen sind.

12. Anordnung nach einem der Ansprüche 3 bis 11, dadurch gekennzeichnet, dass die Streuzentren (S, S2, S3) inhomogen mit einer Dichteerhöhung auf der Objektseite (MO) des Raumes (200) angeordnet sind.

13. Anordnung nach einem der Ansprüche 1 bis 12, dadurch gekennzeichnet, dass ein Absorber (A2) inhomogen mit einer Dichteerhöhung auf der Objektseite (MO) des Raumes (200) angeordnet ist.

14. Anordnung nach einem der Ansprüche 1 bis 13, dadurch gekennzeichnet, dass die Einstrahlung des Prüflichtes unterhalb des Einstrahlwinkels der Totalreflexion erfolgt.

15. Anordnung nach einem der Ansprüche 1 bis 14, dadurch gekennzeichnet, dass dem Indikator (201) ein weiterer Referenzindikator zugefügt ist, dessen Absorption für die Anregungsstrahlung vom zu messenden Parameter abhängt.

16. Methode zur Anordnung von Streuzentren in einem Raum (200) nach Anspruch 3, dadurch gekennzeichnet, dass die Streuzentren durch einen im Raum (200) angeordneten, ausfällbaren Stoff dadurch erzeugbar sind, dass dessen Grenzkonzentration überschritten wird.

## Claims

1. An arrangement for optical measurement of physical quantities comprising a light measuring device (1000) having at least one radiation source, a monochromator emitting test light (PL), a light receiver receiving measuring light (ML) and a display device, and at least one area (200) delimited by a substance and measurable by the light measuring device (1000), into which area the test light (PL) penetrates and which emits measuring light (ML) and which contains an indicator (201) reacting to the physical quantity to be measured with a colour change in the measuring light (ML), characterized in that absorption and film thickness (S2) of the indicator (201) are chosen such that the penetration depth (S1) of the test light (PL) is less than the thickness of the delimited area (200).

2. An arrangement according to Claim 1, characterized in that the indicator (201) is a fluorescent indicator.

3. An arrangement according to Claim 1 or 2, characterized in that dispersal centres (S, S2, S3) are arranged in the area (200).

4. An arrangement according to Claim 3, characterized in that nano capsules (S2, S3) are arranged as dispersal centres in the area (200).

5. An arrangement according to Claim 4, characterized in that the nano capsules (S2, S3) are designed as secondary indicator areas having indicators reacting by a colour change to one or more other physical quantities or particle concentrations.

6. An arrangement according to Claim 3, characterized in that the dispersal centres have a refractive index differing from that of the area (200).

7. An arrangement according to Claim 3, characterized in that metal particles are provided as the dispersal centres in the area (200).

8. An arrangement according to Claim 3, characterized in that non-metals are provided as the dispersal centres in the area (200).

9. An arrangement according to Claim 3, characterized in that pigments are provided as the dispersal centres in the area (200).

10. An arrangement according to one of Claims 1 to 9, characterized in that a wide-band absorber (A) is provided in the area (200).

11. An arrangement according to one of Claims 1 to 9, characterized in that at least two narrowband absorbers (A1, A2) are provided.

12. An arrangement according to one of Claim 3 to 11, characterized in that the dispersal centres (S, S2, S3) are arranged inhomogeneously with a density increase on the object side (MO) of the area (200).

13. An arrangement according to one of Claims 1 to 12, characterized in that an absorber (A2) is arranged inhomogeneously with a density increase on the object side (MO) of the area (200).

14. An arrangement according to one of Claims 1 to 13, characterized in that the incidence of the test light takes place below the incidence angle of the total reflection.

15. An arrangement according to one of Claims 1 to 14, characterized in that the indicator (201) is provided with a further reference indicator whose absorption for the excitation radiation depends on the parameter to be measured.

16. A method for arrangement of dispersal centres in an area (200) according to Claim 3, characterized in that the dispersal centres are generatable by a precipitable substance arranged in the area (200) and by the limit concentration of said substance being exceeded.

**Revendications**

1. Disposition pour la mesure de grandeurs physiques, composée d'un photomètre (1000) avec au minimum une source de rayonnement, d'un récepteur de lumière recevant une lumière de contrôle (ML) et d'un dispositif indicateur et au minimum un espace (200) mesurable par le photomètre (1000), limité à l'aide d'une substance, dans lequel pénètre de la lumière de contrôle (PL) et qui émet de la lumière de mesure (ML) et contient un indicateur (201) réagissant à la grandeur physique à mesurer par une modification de couleur dans la lumière de mesure (ML), caractérisé en ce que l'absorption et l'épaisseur de couche (S2) de l'indicateur (201) sont choisis de telle manière que la profondeur de pénétration (S1) de la lumière de contrôle (PL) est plus réduite que l'épaisseur (S2) de l'espace limité (200).

2. Disposition selon la revendication n° 1, caractérisée en ce que l'indicateur (201) est un indicateur à fluorescence.

3. Disposition selon la revendication n° 1 ou 2, caractérisée en ce que les centres de dispersion (S, S2, S3) sont disposés dans l'espace (200).

4. Disposition selon la revendication n° 3, caractérisée en ce que des nanocapsules (S2, S3) sont disposées dans l'espace (200) en tant que centres de dispersion.

5. Disposition selon la revendication n° 4, caractérisée en ce que les nanocapsules (S2, S3) sont conçus sous forme d'espaces d'indicateurs secondaires qui présentent des indicateurs réagissant, par une modification de couleur, à un ou plusieurs autres grandeurs physiques ou concentrations de particules.

6. Disposition selon la revendication n° 3, caractérisée par le fait que les centres de dispersion présentent un index de réfraction différent de l'espace (200).

7. Disposition selon la revendication n° 3, caractérisée en ce que des particules métalliques sont prévues dans l'espace (200) en tant que centres de dispersion.

8. Disposition selon la revendication n° 3, caractérisée en ce que des métalloides sont prévus dans l'espace en tant que centres de dispersion.

9. Dispersion selon la revendication n° 3, caractérisée en ce que des pigments sont prévus dans l'espace (200) en tant que centres de dispersion.

10. Revendication selon l'une des revendications n° 1 à 9, caractérisée en ce qu'un absorbeur à large bande (A) est prévu dans l'espace (200).

11. Disposition selon l'une des revendications n° 1 à 9, caractérisée en ce qu'au minimum deux absorbeurs à bande étroite (A1, A2) sont prévus.

12. Disposition selon l'une des revendications 3 à 11, caractérisée en ce que les centres de dispersion (S, S2, S3) sont disposés de façon non homogène, avec une augmentation de densité, du côté objet (MO) de l'espace (200).

13. Disposition selon l'une des revendications n° 1 à 12, caractérisée en ce qu'un absorbeur (A2) est disposé de façon non homogène avec une augmentation de densité du côté objet (MO) de l'espace (200).

14. Disposition selon l'une des revendications n° 1 à 13, caractérisée en ce que la radiation incidente de la lumière de contrôle a lieu sous l'angle de réflexion incidente de la réflexion totale.

15. Disposition selon l'une des revendications n° 1 à 14, caractérisée en ce qu'un autre indicateur de référence est adjoint dont l'absorption, pour le rayonnement d'excitation, dépend du paramètre à mesurer.

16. Méthode pour la disposition de centres de dispersion dans un espace (200) selon la revendication n° 3, caractérisée en ce que les centres de dispersion peuvent être produits par une substance précipitable, disposée dans l'espace (200), de telle manière que sa concentration limite est dépassée.

FIG. 1

FIG.2

A1

3a

3b

A2

A3

3c

n3

PL

201

3d

S

S2

3e

S3

11

FIG.3

FIG.4